(19) Europäisches Patentamt
European Patent Office
Office européen des brevets

(11) **EP 1 810 002 B1**

(12) **EUROPEAN PATENT SPECIFICATION**

(45) Date of publication and mention
of the grant of the patent:
**24.04.2013  Bulletin 2013/17**

(51) Int Cl.:
***G01N 3/32*** *(2006.01)*

(21) Application number: **05798776.0**

(22) Date of filing: **02.11.2005**

(86) International application number:
**PCT/SE2005/001638**

(87) International publication number:
**WO 2006/049561 (11.05.2006 Gazette 2006/19)**

(54) **METHOD FOR MEASURING YOUNG'S MODULUS**

VERFAHREN ZUR MESSUNG DES YOUNGSCHEN MODULS

METHODE DE MESURE DU MODULE D'YOUNG

(84) Designated Contracting States:
**AT BE BG CH CY CZ DE DK EE ES FI FR GB GR HU IE IS IT LI LT LU LV MC NL PL PT RO SE SI SK TR**

(30) Priority: **04.11.2004  SE 0402674**

(43) Date of publication of application:
**25.07.2007  Bulletin 2007/30**

(73) Proprietor: **Scania CV AB (PUBL)**
**151 87 Södertälje (SE)**

(72) Inventors:
• **RABENIUS, Björn**
  **S-153 38 Järna (SE)**
• **LINDMARK, Anders**
  **SE-933 34 Arvidsjaur (SE)**

(56) References cited:
**US-A- 3 948 091       US-A- 4 064 745**
**US-A- 4 090 401       US-A- 4 299 120**
**US-A- 5 090 249       US-A- 5 305 645**
**US-A1- 2002 170 360**

• **RICKARDS ET AL: "Tensile properties of grey irons at low temperatures", CRYOGENICS, ELSEVIER, KIDLINGTON, GB, vol. 9, no. 3, 1 June 1969 (1969-06-01), pages 186-193, XP024058096, ISSN: 0011-2275, DOI: 10.1016/0011-2275(69) 90213-6 [retrieved on 1969-06-01]**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

1. Background

1.1. Technical field

The present invention relates to a method for measuring Young's modulus according to the introductory portion of the attached claim 1.

1.2. State of the art

Elastic deformation of metallic materials occurs at relatively low specific loads and is distinguished by mainly three features:

- The material reverts (springs back) to its original shape upon load relief.

- Stress and strain are in linear proportion to one another (Hooke's law)

- There is often minimal, in this context less than 1%, relative strain.

Young's modulus, the so-called elasticity modulus E, is a measure of the rigidity of a material and depends mainly on the atomic bonding, crystallographic structure and composition of the material. The greater E, the smaller the elastic strain at a given stress.

Hooke's law in equation form reads

$$E = \frac{\sigma_x}{\varepsilon_x},$$

where $\varepsilon_s$ is the relative strain in % and $\sigma_x$ is the stress. E is thus the slope of the linear relationship between $\sigma_x$ and $\varepsilon_x$ and is often determined by uniaxial tensile test. The stress, i.e. the specific load, is calculated as

$$\sigma_x = \frac{F_x}{A}$$

where Fx is the load (or force) in N, and A is the cross-sectional area in $m^2$.

Hooke's law, i.e. the linear relationship, applies very well to steel. Such is however not the case with cast iron in general and grey cast iron in particular, for which the elasticity modulus is not constant but decreases with the stress. The reason is that carbon is present in the form of graphite distributed in a matrix of iron. Graphite largely lacks tensile strength, with the result that tensile loading renders it comparable with voids.

Tensile loading, as in the tensile testing of test specimens to determine an elasticity modulus for cast iron, e.g. grey cast iron, results, owing to the present of graphite, in the effective loadbearing cross-sectional area being smaller than the nominal loadbearing cross-sectional area, in local plasticising of the matrix close to the graphite, and in cracking of the graphite.

Upon load relief after such tensile loading, the portion of the matrix which has not plasticised reverts to its original form, exhibiting fully elastic properties. The cracked graphite partly closes up again, resulting in that portion of the material likewise partly reverting to its original form. The plastic deformation, which persists and is irreversible in tension, results in a certain permanent change of form of the material, which means that upon load relief to zero stress a certain permanent elongation will remain. Upon renewed loading, the stress/strain process $\sigma/\varepsilon$ thus starts at that elongation. The stress/strain process is also not the same in load application as in load relief, as the pattern of a load application and relief cycle looks like that of a hysteresis loop.

Against this background, determining a well-defined and relevant E value for cast iron is a problem, not least for grey cast iron and also for a so-called nodular iron (i.e. cast iron containing spheroidal graphite) and for cast iron containing compact graphite.

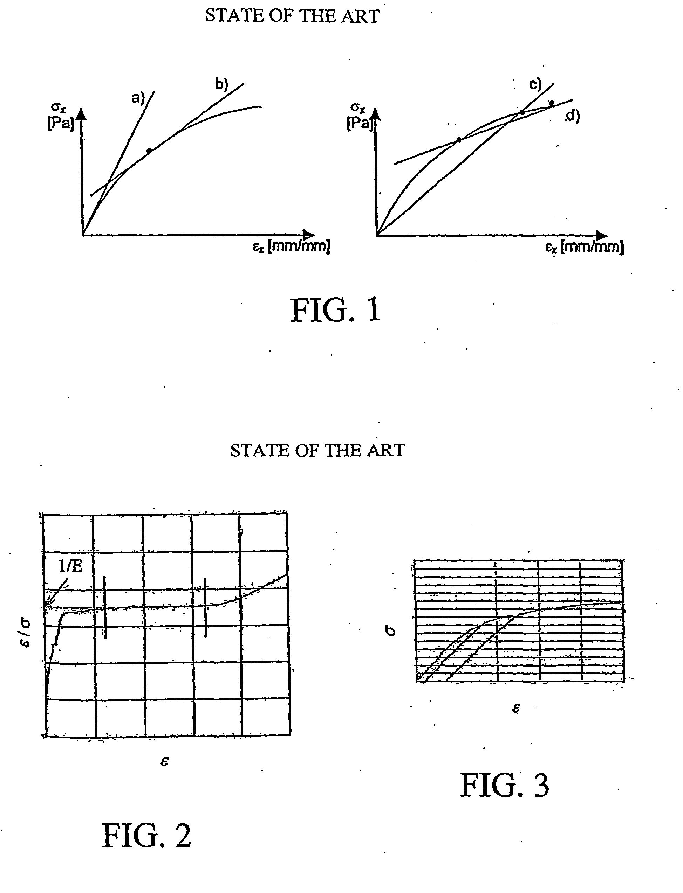

Fig. 1 illustrates four different methods used. Method a) uses the slope of the $\sigma/\varepsilon$ curve at the origin point, i.e. without loading. At that stage of the process no plasticising and no cracking have occurred. Method b), the tangent method, uses the slope of the curve at a particular point on the curve which corresponds to E at a certain stress. Method c), the secant method, uses the slope of a line between the origin point and any desired point on the curve, thereby arriving at a mean value of E for stresses between nil and the stress at the point selected. Method d), a variant of the secant method, uses the slope of a line between two points on the curve other than the origin point and provides a mean value of E between the two stresses to which those two points correspond.

A fifth method (Fig. 2) applies mainly to nodular iron and uses a hyperbolic function in the form of $\varepsilon/\sigma$ plotted against $\varepsilon$, resulting in a relationship with a steep initial portion followed by a plateau which is itself followed by a further rising portion, where the initial portion represents load application, fastening play etc., the plateau portion elastic deformation and the final portion plastic deformation beyond the elastic limit of the test specimen. E is taken as the inverse of the mean of the $\varepsilon/\sigma$ values at the points where the plateau portion begins and ends.

Also proposed for nodular iron is a method (Fig. 3) whereby loading is applied to the material two or three times with no load relief between applications, after which E is measured on the last curve obtained, using any of the methods described above. All of the methods described above have disadvantages, including that the E determined relates to very specific conditions and in most cases pertains to material which differs substantially from material in actual use.

Rickards et al:"Tensile properties of grey irons at low temperatures", Cryogenics, Elsevier, Kidlington, GB, vol.9, no 3, 1 June 196, pages 186-193, XP024058096, ISSN:0011-2275, DOI: 10.1016/0011-2275(69)90213-6 discloses a method for determining an elasticity modulus for metallic material by tensile testing, where the material has at least one precipitation phase distributed in a metallic matrix and also exhibits a non-linear stress/stain relationship within a region of a substantially elastic deformation, with the steps of loading the material and then determining an elasticity modulus in a substantially known manner from the strain/stress relationship.

US 3 948 091 A discloses an apparatus for determining the properties of metallic materials and is dealing with the determination of the elastic modulus from the application of a single strain.

US 4 090 401 A discloses a method of endurance test with initial overloading and is dealing with in tensile testing to first overload a metallic sample.

The object of the present invention is to provide, mainly for cast iron, a method for elasticity modulus measurement which arrives at a well-defined and relevant value applicable to material actually in use, across a wide load range.

2. Summary of the invention

The above object is achieved by a method according to the attached claim 1.

Further advantages are achieved with the embodiments according to the dependent claims.

3. Brief description of the drawings

The invention is described below in more detail with reference to examples of embodiments and the attached drawings, in which

- Fig. 1 depicts schematically four known methods a) - d) for determining an elasticity modulus value E from a stress/strain chart, where E corresponds to the slope of the respective line in the chart,

- Fig. 2 depicts schematically a fifth method for determining an elasticity modulus value E, using a hyperbolic representation $\varepsilon/\sigma$ of stress $\sigma$ and strain $\varepsilon$, where E corresponds to the inverse of the mean value of $\varepsilon/\sigma$ on a central plateau portion of the resulting curve,

- Fig. 3 depicts schematically a sixth method for determining an elasticity modulus value E from a stress/strain chart, where E is determined from the second or third load curve for a given test specimen by any of the five methods described above,

- in Fig. 4, the lower curve depicts schematically the results of measuring the elasticity modulus E according to the present invention, and the upper curve the results of measurements substantially according to the aforesaid sixth method, and

- Fig. 5 depicts schematically a load application cycle according to the present invention.

4. Description of preferred embodiments

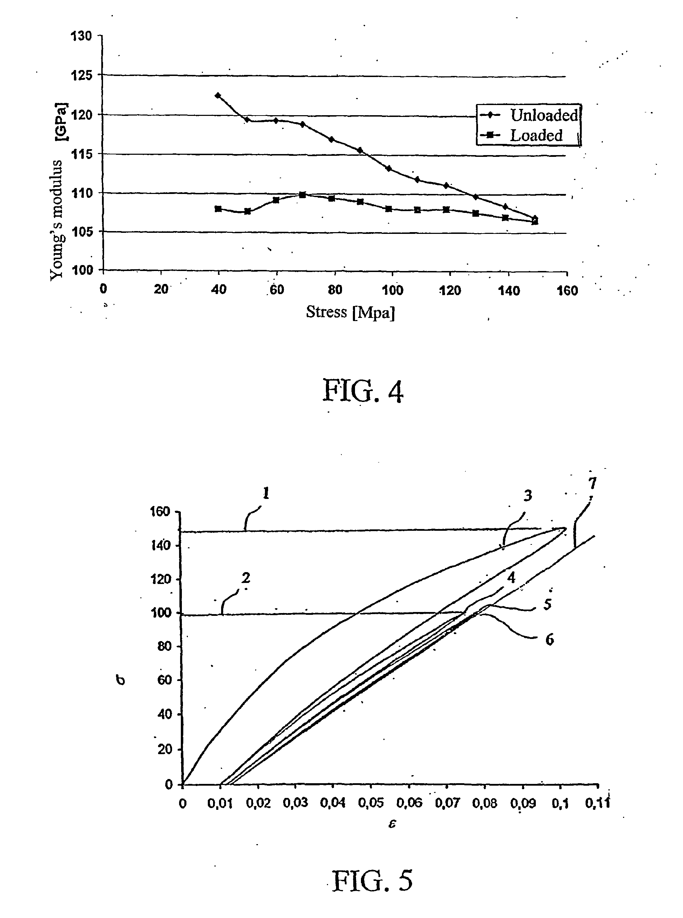

According to the present invention, the method for determining an elasticity modulus thus entails tensile loading of material to two different stress levels 1, 2, in this case 150 and 100 MPa respectively, as illustrated in Fig. 5, whereby the method is intended and suited to metallic material which has at least one precipitation phase distributed in a metallic matrix and a non-linear stress/strain relationship within a portion of the relationship which corresponds substantially to elastic deformation.

Fig. 5 thus depicts a stress/strain relationship corresponding to a preferred load application cycle according to a preferred embodiment of the method according to the invention.

As a first step 3, the material is loaded to a limit stress $\sigma_{max}$ corresponding to an expected maximum load and is thereafter fully relieved of load. This is followed by loading the material again at least once, but preferably three times 4, 5, 6, to a working stress $\sigma_{op}$ which corresponds to an expected working load during use of the material, with complete removal of load from the material after each such load step.

From the stress/strain relationship pertaining to the last load step 6, an elasticity modulus is then determined in a substantially known manner, preferably by any one of the four methods described above (Figs. 1 and 2).

According to a preferred embodiment, the elasticity modulus is determined as the slope of the stress/strain relationship 6, i.e. the slope of the tangent 7 of the relationship at the working stress $\sigma_{op}$.

It is particularly preferred here that the determination of an elasticity modulus from the stress/strain relationship be based on the load relief portion of the stress/strain relationship, which is represented in the embodiment last mentioned above, by the slope of the tangent 7 at the working stress $\sigma_{op}$ of the load relief portion of the relationship which is used as a measure of the elasticity modulus, as illustrated in Fig. 5.

The results depicted by way of example in Fig. 4 show that a very well-defined and at the same time relevant value of E (the lower curve in Fig. 4) is obtained for a broad range of working stresses when measurement is effected after the initial loading to the limit stress. The resulting relationship between $\sigma_{op}$ and E represents a largely horizontal line, i.e. an E which is largely independent of $\sigma_{op}$ from a relatively low $\sigma_{op}$ to $\sigma_{op} = \sigma_{max}$.

Determining an elasticity modulus without a first load step to the limit stress (the upper curve in Fig. 4) results, even if three load steps are used, in an E which decreases sharply with increasing working stress, which makes this procedure disadvantageous, partly because of great sensitivity to changes in working stress as regards any particular E.

Elasticity modulus determination according to the invention thus arrives at a broadly applicable well-defined E without overestimation of E. The method is particularly applicable in cases where, for example, a component is subject in a use application to greater stress than that to which it is subsequently subject during actual use.

The invention is particularly applicable to grey cast iron, nodular iron and compact-graphite iron, where there are no metallic precipitations (carbon in the form of graphite) in a metallic matrix.

The invention is described above in relation to examples of embodiments.

Thus embodiments are conceivable in which one, two, three or more loadings to the working stress are applied after the initial loading to the limit stress.

The invention is therefore not to be regarded as limited to the embodiments indicated above but may be varied within the scope indicated by the attached claims.

## Claims

1.  A method for determining an elasticity modulus for metallic material by tensile testing, where the material has at least one precipitation phase distributed in a metallic matrix and also exhibits a non-linear stress/strain relationship within a region of substantially elastic deformation, whereby Hook's law is not valid for the material, **characterised by** the steps of

    - a first step (3) of loading the material to a limit stress (1, ($\sigma_{max}$) which corresponds to an expected maximum working load, and of thereafter removing the load from the material;
    - loading the material again at least once (4, 5, 6) to a working stress (2, ($\sigma_{op}$) which corresponds to an expected working load during use;
    - determining an elasticity modulus in a substantially known manner from the stress/strain relationship pertaining to the last loading,

    wherein said material is grey cast iron, nodular iron or compact-graphite cast iron.

2.  A method according to claim 1, **characterised by** the steps of loading the material again three times (4, 5, 6) with intermediate removals of load.

3.  A method according to claim 1 or 2, **characterised by** the step of determining the elasticity modulus as the slope of the stress/strain relationship, i.e. the slope of the tangent (7) of the relationship, at the working stress.

4.  A method according to claim 1, 2 or 3, **characterised by** the step of determining the elasticity modulus on the basis of the load relief portion of the stress/strain relationship.

## Patentansprüche

1.  Verfahren zum Ermitteln eines Elastizitätsmoduls für ein metallisches Material durch Zugversuch, wobei das Material zumindest eine in einer metallischen Matrix verteilte Ausscheidungsphase aufweist und weiterhin eine nicht lineare Spannungs-/Dehnungsbeziehung in einem Bereich von im Wesentlichen elastischer Deformation erfährt, wodurch das Hook'sche Gesetz für das Material nicht gültig ist, **gekennzeichnet durch** die Schritte:

    - ein erster Schritt (3) des Belastens des Materials bis zu einer Grenzspannung (1, $\sigma_{max}$), die einer erwarteten maximalen Betriebslast entspricht, und des anschließenden Entlastens das Materials;
    - erneutes, zumindest einmaliges Belasten (4, 5, 6) des Materials mit einer Arbeitsspannung (2, $\sigma_{op}$), die einer erwarteten Betriebslast im Einsatz entspricht;
    - Ermitteln eines Elastizitätsmoduls auf eine im Wesentlichen bekannten Weise mittels der Spannungs-/Dehnungsbeziehung bezogen auf das letztmalige Belasten,

    wobei das Material Grauguss, Sphäroguss oder Vermikulargraphitguss ist.

2.  Verfahren nach Anspruch 1, **gekennzeichnet durch** die Schritte des erneuten, dreimaligen Belastens (4, 5, 6) des Materials mit zwischenzeitlicher Entlastung.

3.  Verfahren nach Anspruch 1 oder 2, **gekennzeichnet durch** den Schritt des Ermittelns des Elastizitätsmoduls als die Steigung der Spannungs-/Dehnungsbeziehung, d.h. die Steigung der Tangente (7) der Beziehung, bei der Betriebsspannung.

4.  Verfahren nach Anspruch 1, 2 oder 3,

**gekennzeichnet durch** den Schritt des Ermittelns des Elastizitätsmoduls auf Basis des Entlastungsanteils der Spannungs-/Dehnungsbeziehung.

## Revendications

1. Procédé de détermination d'un module d'élasticité d'un matériau métallique par essai de traction, lequel matériau a au moins une phase de précipitation répartie dans une matrice métallique et présente également une relation contrainte/déformation non linéaire dans une zone de déformation essentiellement élastique, de sorte que la loi de Hook ne s'applique pour le matériau, **caractérisé par** les étapes suivantes :

   - une première étape (3) consistant à exposer le matériau à une contrainte limite (1, $\sigma_{max}$) qui correspond à une charge de travail maximale prévue, puis à retirer la charge du matériau ;
   - exposer de nouveau au moins une fois (4, 5, 6) le matériau à une contrainte de travail (2, $\sigma_{op}$) qui correspond à une charge de travail prévue pendant l'utilisation ;
   - déterminer un module d'élasticité d'une manière essentiellement connue à partir de la relation contrainte/déformation relative à la dernière exposition à une charge,

   ledit matériau étant de la fonte grise, de la fonte ductile ou de la fonte à graphite compact.

2. Procédé selon la revendication 1, **caractérisé par** les étapes consistant à exposer de nouveau trois fois (4, 5, 6) le matériau à une charge, avec retrait intermédiaire des charges.

3. Procédé selon la revendication 1 ou 2, **caractérisé par** l'étape consistant à déterminer le module d'élasticité comme la pente de la relation contrainte/déformation, à savoir la pente de la tangente (7) de la relation, sous la contrainte de travail.

4. Procédé selon la revendication 1, 2 ou 3, **caractérisé par** l'étape consistant à déterminer le module d'élasticité à partir de la partie de la relation contrainte/déformation correspondant à la suppression de la charge.

STATE OF THE ART

FIG. 1

STATE OF THE ART

FIG. 3

FIG. 2

FIG. 4

FIG. 5

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 3948091 A

- US 4090401 A

**Non-patent literature cited in the description**

- Tensile properties of grey irons at low temperatures. **RICKARDS et al.** Cryogenics. Elsevier, 01 June 1960, vol. 9, 186-193